# EUROPEAN PATENT SPECIFICATION

(11) **EP 2 273 816 B1**
(45) Date of publication and mention of the grant of the patent: **05.12.2012**
(21) Application number: 09290494.5
(22) Date of filing: 26.06.2009
(51) Int. Cl.: H04W 24/02

(54) **Adding a new radio cell to a wireless communication network**
Hinzufügen einer neuen Funkzelle zu einem drahtlosen Kommunikationsnetzwerk
Ajout d'une nouvelle cellule radio dans un réseau de communication sans fil

(43) Date of publication of application: 12.01.2011
(73) Proprietor: Alcatel Lucent, 75007 Paris (FR)
(72) Inventor: Kaminski, Stephen, 73054 Eislingen (DE); Bakker, Hajo, 71735 Eberdingen (DE)
(74) Representative: Wetzel, Emmanuelle

(56) References cited:
- WO-A-2005/015917
- WO-A-2006/083580
- US-A1- 2005 255 890
- US-A1- 2009 129 291

## Description

### Field of the invention

The present invention relates to a method of adding a new radio cell to an existing wireless communication network, more precisely to a method of assigning a physical cell identity to the new radio cell.

### Background and related art

Each cell in a wireless communication network is assigned a physical cell identity. This physical cell identity is used to address the data being sent from a mobile device to the base station serving the cell. Conflicts of physical cell identities, e.g. two neighboring cells having the same physical cell identity, can lead to communication failures. In case that a new radio cell is included into an existing wireless communication network, it must be ensured that the physical cell identity of the new radio cell is unique in the vicinity of the new radio cell.

Therefore, the physical cell identity of the new radio cell is determined in a preceding planning phase.

US 200910129291 A1 discloses an access point, which is configured based on acquired information. WO 2005/05917 A2 discloses a radio base station in a mobile communication network, which collects information about the network and exchanges data with a configuration device.

### Summary of the invention

The invention provides a method, a computer program product and an apparatus for determining the physical cell identity of a new radio cell autonomously as claimed in the independent claims. Embodiments of the invention are given in the dependent claims.

According to embodiments of the invention, the new radio cell learns about the physical cell identities of neighboring radio cells and the neighboring radio cells know the physical cell identity of the new radio cell. Therefore, the physical cell identity of the new radio cell is selected from a range of startup physical cell identities that comprises at least one physical cell identity, which is not assigned to the neighboring base stations. The new radio cells learns with this startup physical cell identity about the physical cell identity of the neighboring base stations and then selects autonomously without human interaction its permanent physical cell identity. Thus, a cost intensive and human resources consuming planning phase for determining the physical cell identity of the new radio cell is avoided.

Cell Global Identities (CGls) are in 3GPP Long Term Evolution networks unique identifiers for each radio cell of a wireless communication network. Physical Cell Identities (PCIs) are in 3GPP Long Term Evolution networks non-unique identifiers for each radio cell of a wireless communication network.

According to an embodiment of the invention the physical cell identity for a first base station, being added to an existing wireless communication network having a set of base stations, is assigned to a startup physical cell identity. The startup physical cell identity is selected from a range of physical cell identities comprising at least one physical cell identity. The range of which the startup physical cell identity is selected is known to every cell in the wireless communication network, so that no base station serving a cell of the existing wireless communication network is assigned to a physical cell identity of the range of the startup physical cell identities.

Usually, there is a plurality of mobile devices located in the transmission range of the new radio cell. The new radio cell with the startup physical cell identity does not use all radio resources. The base station of the new radio cell just transmits the radio signals as being in the unloaded condition, i.e. Synchronisation Channel (SCH), Reference Signals (RS) and Broadcast Channel (BCH). This means about 15-25% of the radio resources are used by the base station of the new radio cell with the startup physical cell identity. This is advantageous because radio interferences are avoided, which could disturb the radio communication of mobile devices with other base stations.

As long as the new radio cell is operated with the startup-PCI, the new radio cell shall not allow any UE to associate to it, neither by handover from another radio cell, nor by initial association attempts of any mobile devices. Hence, a plurality of handover requests is received by the base station serving the new radio cell from the base stations serving the neighboring cells of the wireless communication network. A handover is requested via a message containing the physical cell identity of the base station connected to the mobile device that shall be handed over. Thus, the base station of the new radio cell receives messages from a subset of base stations of the wireless communication network, each message comprising the physical cell identity of a base station of the wireless communication network. Usually the base stations requesting a handover are the neighboring base stations.

Preferably, the base station of the new radio cell accepts emergency calls from mobile devices.

After having received the messages from the subset of base stations of the wireless communication network a physical cell identity is selected by the first base station for itself. Because of the received physical cell identities in the handover request messages the base station knows the physical cell identities of its neighboring base stations. Hence, the base station chooses a physical cell identity for the new radio cell that is different from the physical cell identities of the neighboring cells.

In accordance with an embodiment of the invention, the base station of the new radio cells requests a neighbor relation table from the neighboring base stations and receives the neighbor relation table from the neighboring base stations. This is advantageous because via the neighbor relation table the physical cell identities of the neighboring base stations are received, and additionally the physical cell identities of the neighbors' neighbors are received. These physical cell identities are avoided when the permanent physical cell identity for the base station is chosen. Receiving the neighbor relation tables is advantageous because a temporary failure of a radio cell would result in that no handover requests are received by the first base station with the startup physical cell identity from the cell with the temporary failure. By receiving the neighbor relation tables the cell with the startup physical cell identity also knows about the physical cell identity of the cell with the temporary failure. By receiving the neighbor relation tables it is also excluded that cells serving no mobile device are not noticed by the first base station with the startup physical cell identity.

In accordance with an embodiment of the invention, a timer is operated on the first base station that defines the time of receiving physical cell identities within messages from the subset of base stations of the wireless communication network during the phase when the first base station is assigned to the startup physical cell identity. The timer can be adjusted to a plurality of parameters, e.g. the time of day or the number of handover requests per time. This is advantageous because the first base station has to be operated in the startup phase with the startup physical cell identity long enough to receive at least one handover request from each neighboring base station. For example, in an urban environment more handovers are requested per time than in a rural environment. The handover requests also vary depending on the time of day, usually by night less handovers are requested than by day. Therefore, the timer is preferably longer in rural environments than in urban environments, and it is longer by night than by day. For example, in a rural environment by night the timer is set to 12 hours, in an urban environment during daytime the timer is set to 10 minutes.

In accordance with embodiments of the invention, the radio parameters of the first base station with the startup physical cell identity are adjusted until a predefined number of handover requests is received. Preferably, the radio power of the first base station with the startup physical cell identity is increased until a predefined number of handover requests is received. The number of handover requests increases when the radio power is increased because the cell of the first base station gets bigger by increasing the radio power.

In accordance with an embodiment of the invention, the radio parameters of the first base station with the startup physical cell identity are adjusted until a predefined number of neighboring radio cells is achieved. By increasing the radio power the cell of the first base station gets bigger. Thus, the number of neighboring radio cells increases.

In accordance with an embodiment of the invention, the communication between the first base station and the subset of base stations of the wireless communication network is done via an X2 or S1 interface, which are standard interfaces in 3GPP Long Term Evolution networks.

In accordance with an embodiment of the invention, a second base station of the set of mobile stations of the wireless communication network aborts the handover procedure of a mobile device when a handover request acknowledge message is received from the first base station with the startup physical cell identity. This is advantageous because a cell with a startup physical cell identity is not intended to acknowledge handover requests. A potential attacker of the wireless communication network could use a startup physical cell identity to communicate with mobile devices of the wireless communication network. By aborting handover procedures to cells with a startup physical cell identity this is impossible.

With any embodiment of the invention described above it is possible without any further adjustments to add two or more new base stations to an existing wireless communication network. According to embodiments of the invention the two newly added base stations are operated in a startup phase with a startup physical cell identity that can be different or the same. It can only be different when the startup physical cell identity is selected from a range of startup physical cell identities. When the startup physical cell identities of the newly added base stations are different they behave according to embodiments of the invention and select physical cell identities at least of the neighboring base stations via handover request messages.

When the startup physical cell identities of the two newly added base stations is identical, it does not disturb the communication in the wireless communication network, because the base stations with the startup physical cell identity do not accept any handover requests. By receiving the handover requests, the base stations with the startup physical cell identity collect the physical cell identities of the neighboring base stations. When two base stations have the same startup physical cell identity one base station could receive the handover requests meant to be sent to the other one. Thus, when two base stations are operated with the same startup physical cell identity the two base stations receive handover requests from even more neighboring base stations, so that the two base stations receive the physical cell identities of more base stations in the vicinity that are avoided when the permanent physical cell identity is chosen. Hence, adding two base stations at the same time to an existing wireless communication network is possible without any problems; adding two base stations at the same time to an existing wireless communication network even is better for avoiding a conflict of physical cell identities.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

### Brief description of the drawings

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Some embodiments of methods and apparatus in accordance with embodiments of the present invention are now described, by way of example only, and with reference to the accompanying drawings, in which:
Fig. 1 shows a schematic view of a part of a wireless communication network;
Fig. 2 shows a schematic view of a part of a wireless communication network;
Fig. 3 shows a block diagram of an embodiment of the invention;
Fig. 4 shows a block diagram of an embodiment of the invention;
Fig. 5 shows a flow diagram of an embodiment of the invention; and
Fig. 6 shows a block diagram of an embodiment of the invention.

### Detailed description of the drawings

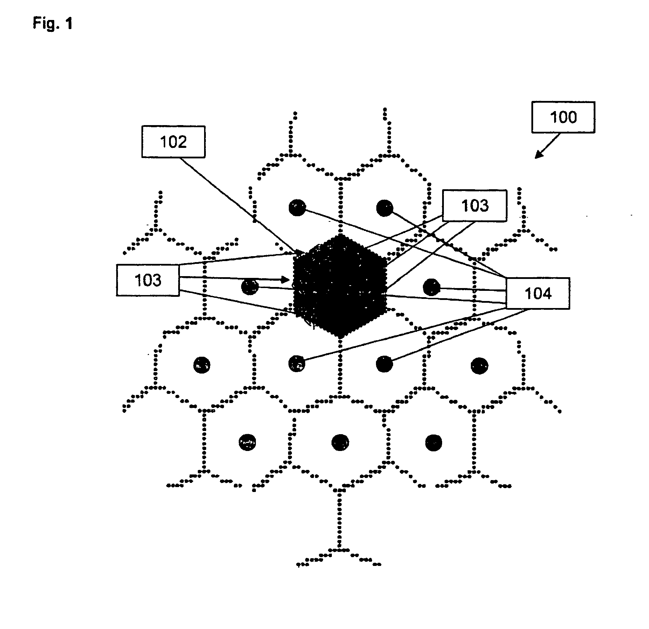

Fig. 1 shows a schematic view of a part of a wireless communication network 100 with a first base station 102 having a startup physical cell identity. A plurality of mobile devices 103 is located in the transmission range of the first base station 102. Hence, the neighboring base stations 104 send handover request messages to the first base station 102 including the physical cell identities of their cells. Based on these physical cell identities the first base station 102 chooses a permanent physical cell identity and avoids a physical cell identity conflict by avoiding the physical cell identities received from the neighboring base stations 104.

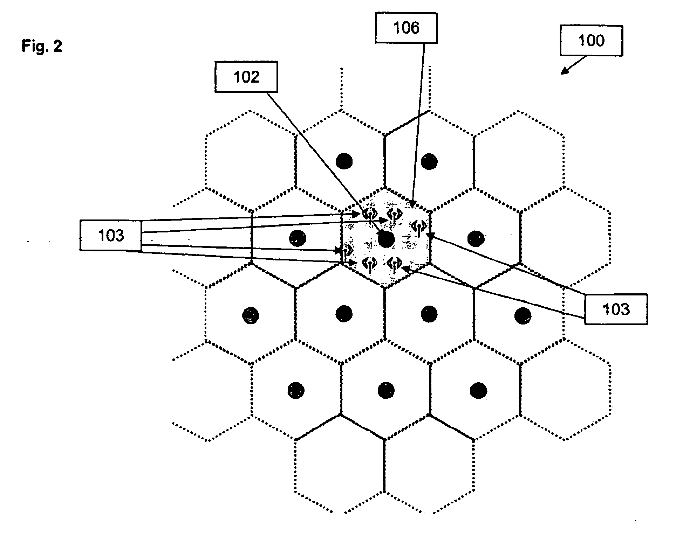

Fig. 2 shows a schematic view of a part of a wireless communication network 100 comprising a first base station 102 with a permanent physical cell identity. The first base station 102 has chosen the permanent physical cell identity by avoiding the physical cell identities of the neighboring base stations. The first base station 102 serves now the wireless communication of mobile devices 103 in cell 106 in the communication network 100. The permanent physical cell identity was selected by avoiding the physical cell identities of the neighboring cells to avoid a physical cell identity conflict.

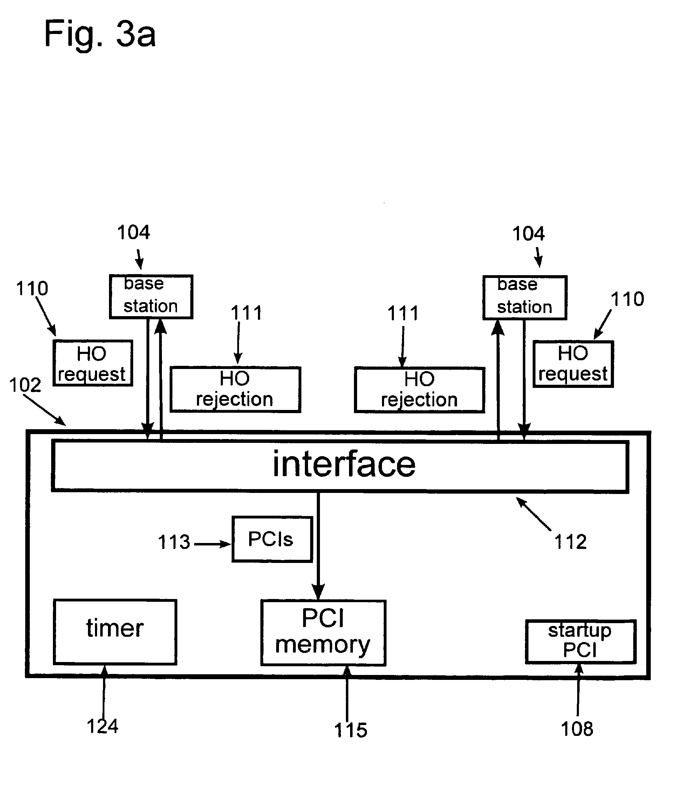

Fig. 3a shows a block diagram of an embodiment of the invention comprising neighboring base stations 104 and the first base station 102. The first base station 102 is assigned to a startup physical cell identity 108 and comprises an interface 112, a physical cell identity memory 115 and a timer 124. The startup physical cell identity 108 is selected from a range of startup physical cell identities that are not allowed to be assigned as permanent physical cell identities. In the physical cell identity memory 115 the physical cell identities 113 of neighboring base stations 104 are stored. The physical cell identities 113 of the neighboring base stations 104 are received from the neighboring base stations 104 via the handover requests 110. No handover request 110 is acknowledged when the first base station 102 is assigned to the startup physical cell identity 108. Therefore, handover rejection messages 111 are sent to each base station 104 sending a handover request 110. As long as the timer 124 does not indicate that a predefined time has expired the physical cell identities 113 are received and stored in the physical cell identity memory 115.

In operation, the first base station 102 is assigned to a startup physical cell identity 108. The first base station 102 receives handover requests 110 from a plurality of neighboring base stations 104 via an interface 112. Each handover request 110 comprises the physical cell identity of a neighboring base station 104. The received physical cell identities 113 are stored in a physical cell identity memory 115.

Because the first base station 102 is assigned to a startup physical cell identity 108, each handover request 110 is rejected by sending a handover rejection message 111 to the base station 104, which has sent the handover request 110. The timer 124 ends the operation of the first base station 102 with the startup physical cell identity 108 after a predefined time.

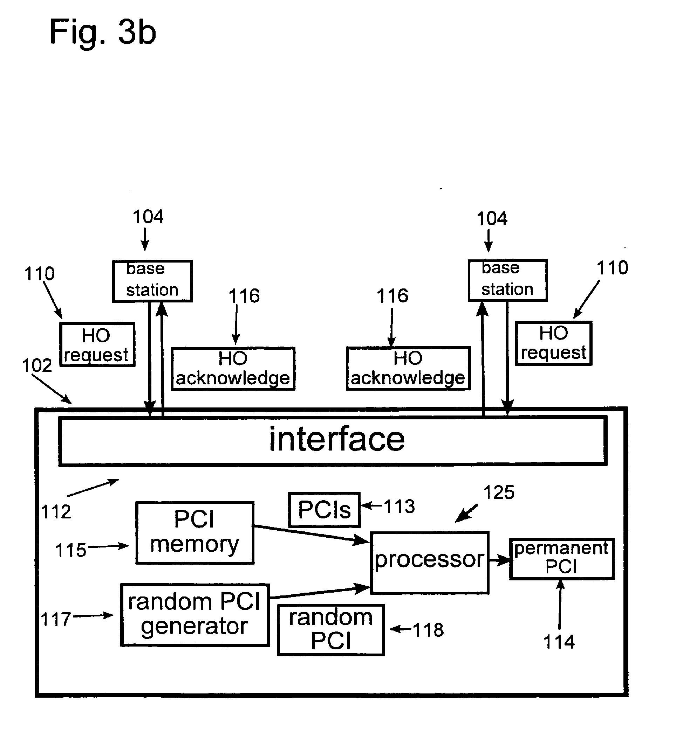

Fig. 3b shows a block diagram of an embodiment of the invention comprising the first base station 102, which is assigned to a permanent physical cell identity 114, and neighboring base stations 104. The first base station 102 comprises an interface 112 adapted for communicating with neighboring base stations 104, a physical cell identity memory 115, a random physical cell identity generator 117, a processor 125. The first base station 102 receives via the interface 112 handover requests 110 from the neighboring base stations 104. The first base station 102 is assigned to a permanent physical cell identity 114, which is chosen from the processor 125. The determination of the processor 125 is based on the physical cell identities 113 of the neighboring base stations 104, stored in the physical cell identity memory 115, and a random physical cell identity 118, generated by the random physical cell identity generator 117. Because the first base station 102 is assigned to a permanent physical cell identity 114, the handover requests 110 are acknowledged by sending a handover acknowledge message 116 to the neighboring base stations 104.

In operation, the processor 125 reads out the physical cell identity memory 115, in which the physical cell identities 113 of the neighboring base stations 104 are stored. The random physical cell identity generator 117 generates a random physical cell identity 118 and sends it to the processor 125. The processor 125 compares the generated random physical cell identity 118 with the physical cell identities 113 of the neighboring base stations 104 stored in the physical cell identity memory 115. If the random physical cell identity 118 is among the physical cell identities 113 of the neighboring base stations 104, a new random physical cell identity 118 is generated until the random physical cell identity 118 is not among the physical cell identities 113of the neighboring base stations 104. If the random physical cell identity 118 is not among the physical cell identities 113 of the neighboring base stations 104, the random physical cell identity 118 is assigned to the first base station 102 as the permanent physical cell identity 114.

When the first base station 102 is operated with the permanent physical cell identity 114, the first base station 102 receives handover requests 110 from neighboring base stations 104 via the interface 112. Because the first base station 102 is assigned to the permanent physical cell identity 114, the handover requests 110 are acknowledged by the first base station 102 by sending handover acknowledge messages 116 to the neighboring base stations 104. The handovers are executed and the first base station 102 operates with a permanent physical cell identity 114 in the wireless communication network.

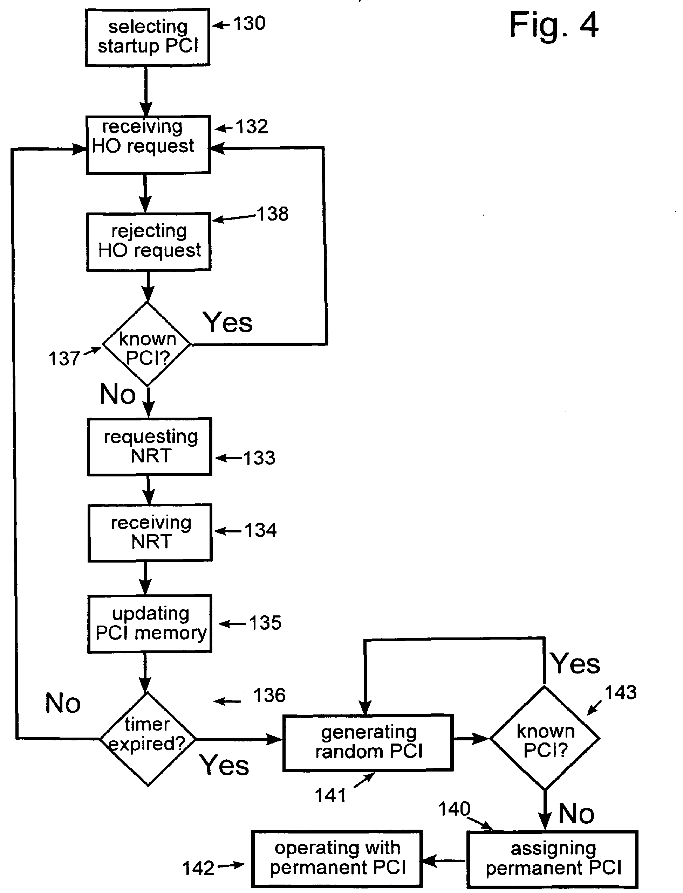

Fig. 4 shows a flow diagram of an embodiment of the invention. First, a startup physical cell identity is selected 130. Then, a handover request comprising the physical cell identity from a neighboring base station is received by the first base station 132. The handover request is rejected by the first base station in step 138. The first base station has received the physical cell identity of the neighboring base station with the handover request in step 132. This physical cell identity of the neighboring base station is compared in step 137 to the physical cell identities already stored in the physical cell identity memory. If the physical cell identity of the neighboring base station is already stored in the memory, the next handover request is received in step 132.

If the physical cell identity of the neighboring base station is not yet stored in the physical cell identity memory, a neighbour relation table is requested from the neighboring base station by the first base station in step 133. A neighbour relation table comprises the physical cell identities of the neighboring base stations of the respective base station. Step 134 comprises receiving the neighbour relation table from the neighboring base station. Thus, the first base station has received at least one physical cell identity of a neighboring base station, which is not yet stored in the physical cell identity memory. It can be that the neighbour relation table comprises additional physical cell identities of other neighboring base stations or even of neighbours" neighbours of the first base station. The at least one received physical cell identity is stored in the physical cell identity memory in step 135. Further, in step 136 a timer determines if a predefined time has expired. If the time has not expired, the next handover request is received in step 132.

If the predefined time has expired, a random physical cell identity is generated as a candidate for the permanent physical cell identity of the first base station in step 141. Step 143 comprises comparing the random physical cell identity to the physical cell identities stored in the physical cell identity memory. If the random physical cell identity is identical to a physical cell identity stored in the physical cell identity memory, a new random physical cell identity is generated by executing step 141 again..

If the random physical cell identity is not identical to a physical cell identity stored in the physical cell identity memory, it is assigned in step 140 to the first base station as the permanent physical cell identity. After step 140 the first base station is operated with the permanent physical cell identity in step 142.

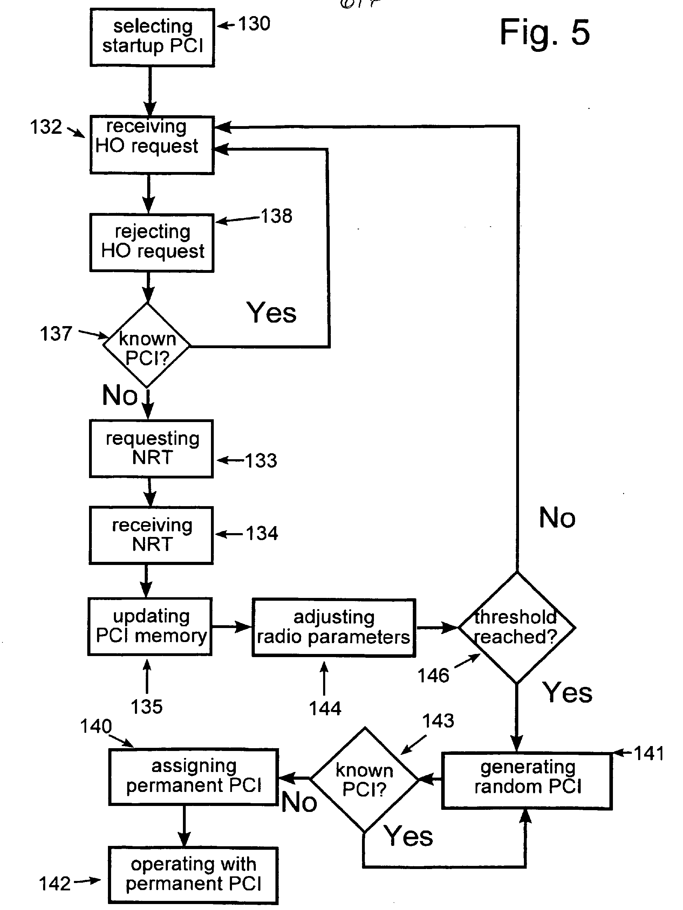

Fig. 5 shows a flow diagram of an embodiment of the invention. The steps 130, 132, 138, 137, 133, 134 and 135 are performed in the same way as it was explained for fig. 4.

The difference to fig. 5 is, that after step 135 step 144 is performed. Step 144 conprises adjusting the radio parameters of the base station in order to achieve a higher radio range of the base station. After step 144 step 146 is performed, which comprises checking if a predefined number of handover requests is received or if a predefined number of neighboring radio cells is achieved. If one of the two conditions is fulfilled, steps 141, 143, 140 and 142 are performed in the same way as in fig. 4.

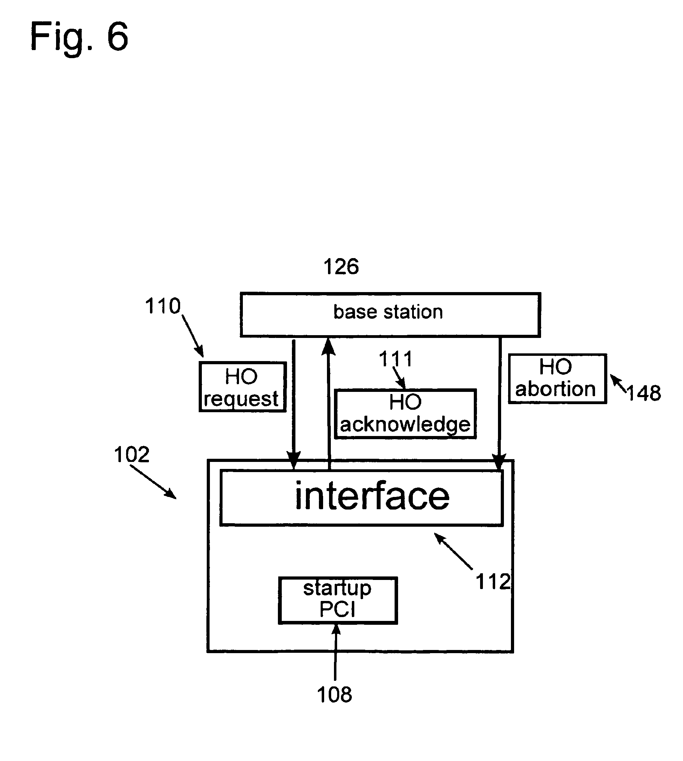

Fig. 6 shows a block diagram of an embodiment of the invention comprising a second base station 126 and a first base station 102, which is assigned to a startup physical cell identity 108 and comprises an interface 112. The second base station 126 sends a handover request 110 to the first base station 102. The first base station 102 acknowledges the handover with a handover acknowledge message 111 before the second base station 126 aborts the handover procedure.

In operation the second base station send a handover request 110 to the first base station 102, which is assigned to a startup physical cell identity 108. Although the first base station 102 should reject the handover request 110, because according to embodiments of the invention the first base station 102 shall not accept any handover request 110 as long as the first base station 102 is assigned to the startup physical cell identity 108, the second base station 126 receives a handover acknowledge message 111 from the first base station 102. Then, the second base station 126 aborts the handover procedure in order to prevent the use of the startup physical cell identity 108 to communicate with mobile devices of the wireless communication network, e.g. by a potential attacker of the wireless communication network.

### List of reference numerals

- 100: wireless communication network
- 102: first base station
- 103: mobile device
- 104: neighboring base station
- 106: cell served by first base station
- 108: startup physical cell identity
- 110: handover request message
- 111: handover rejection message
- 112: interface
- 113: permanent physical cell identities
- 114: permanent physical cell identity
- 115: physical cell identity memory
- 116: handover acknowledge message
- 117: random physical cell identity generator
- 118: random physical cell identity
- 124: timer
- 125: processor
- 126: second base station
- 128: handover acknowledge message
- 130: selecting startup physical cell identity from range of startup physical cell identities
- 133: requesting neighbor relation table from neighboring base station
- 132: receiving handover requests from neighboring base sta- tion
- 134: receiving neighbor relation table from neighboring base station
- 135: updating physical cell identity memory
- 136: checking if timer has expired
- 137: checking if physical cell identity is already in memory
- 138: rejecting handover request
- 139: generating random physical cell identity
- 140: assigning permanent physical cell identity to first base station
- 141: generating random physical cell identity
- 142: operating as base station with permanent physical cell identity
- 143: comparing random physical cell identity with physical cell identities in the physical cell identity memory
- 144: adjusting radio parameters
- 146: checking if predefined number of handover requests or neighboring radio cells is achieved

## Claims

1. A method of selecting a physical cell identity for a first base station (102) being added to an existing wireless communication network (100) having a set of base stations, the first base station being assigned to a start-up physical cell identity (108), wherein the method comprises:
- receiving messages (110) from a subset of base stations of the wireless communication network by the first base station, each one of the messages comprising the physical cell identity (118) of a base station (104) of the wireless communication network; and
- selecting a permanent physical cell identity (114) for the first base station different from the physical cell identities of the subset of base stations of the wireless communication network by the first base station using the physical cell identities received with the messages;
wherein the start-up physical cell identity is chosen (130) from a range comprising at least one physical cell identity, and wherein the start-up physical cell identities from the range are not assigned to base stations as permanent physical cell identities.

2. The method of any one of the preceding claims, wherein the physical cell identities of the subset of base stations are sent to the first base station via a plurality of handover requests.

3. The method of any one of the preceding claims, wherein the physical cell identities of the subset of base stations of the wireless communication network are sent to the first base station via at least one neighbour relation table (122).

4. The method of any one of the preceding claims, wherein the method further comprises operating a timer (124) on the first base station for defining the time of receiving physical cell identities within messages from the subset of base stations of the wireless communication network.

5. The method of any one of the preceding claims, wherein the method further comprises adjusting (144) the radio parameters of the first base station with the start-up physical cell identity until a predefined number of handover requests is received.

6. The method of any one of the preceding claims, wherein the method further comprises adjusting the radio parameters of the first base station with the start-up physical cell identity until a predefined number of neighbouring radio cells is achieved.

7. The method of any one of the preceding claims, wherein the method further comprises rejecting initial association attempts from a mobile device by the first base station with the start-up physical cell identity.

8. The method of any one of the preceding claims, wherein the communication of the first base station with the subset of base stations is done via a X2 interface.

9. The method of any one of the preceding claims, wherein the communication of the first base station with the subset of base stations is done via a S1 interface.

10. The method of any one of the preceding claims further comprising operating a second base station (126) of the set of mobile stations of the wireless communication network, wherein the method comprises aborting (128) a handover procedure of a mobile device when a handover request acknowledge message is received from the first base station with a start-up physical cell identity.

11. A computer program product comprising machine executable instructions for performing the method of any one of the preceding claims on a base station.

12. A base station apparatus being operable to perform a method according to any one of the claims 1-10.

## Patentansprüche

1. Verfahren zum Auswählen der Identität einer physikalischen Zelle für eine erste Basisstation (102), welche einem bestehenden drahtlosen Kommunikationsnetzwerk (100) mit einer Gruppe von Basisstationen hinzugefügt wird, wobei die erste Basisstation einer Start-up-Identität der physikalischen Zelle (108) zugeordnet wird, wobei das Verfahren umfasst:
- Empfangen von Nachrichten (110) von einer Teilgruppe von Basisstationen des drahtlosen Kommunikationsnetzwerks an der ersten Basisstation, wobei eine jede der Nachrichten die Identität der physikalischen Zelle (118) einer Basisstation (104) des drahtlosen Kommunikationsnetzwerks enthält; und
- Auswählen einer permanenten Identität der physikalischen Zelle (114) für die erste Basisstation, welche sich von den Identitäten der physikalischen Zellen der Teilgruppe von Basisstationen des drahtlosen Kommunikationsnetzwerks unterscheidet, durch die erste Basisstation unter Verwendung der mit den Nachrichten empfangenen Identitäten der physikalischen Zellen;
wobei die Start-up-Identität der physikalischen Zelle aus einer Gruppe bestehend aus mindestens einer Identität der physikalischen Zelle gewählt (130) wird, und wobei die Start-up-Identitäten der physikalischen Zellen aus der Gruppe keiner Basisstation als permanente Identitäten der physikalischen Zellen zugeordnet sind.

2. Verfahren nach einem der vorhergehenden Ansprüche, wobei die Identitäten der physikalischen Zellen der Teilgruppe von Basisstationen über eine Vielzahl von Handover-Anforderungen an die erste Basisstation gesendet werden.

3. Verfahren nach einem beliebigen der vorstehenden Ansprüche, wobei die Identitäten der physikalischen Zellen der Teilgruppe von Basisstationen des drahtlosen Kommunikationsnetzwerks über mindestens eine Nachbarschaftsbeziehungstabelle (122) an die erste Basisstation gesendet werden.

4. Verfahren nach einem beliebigen der vorstehenden Ansprüche, wobei das Verfahren weiterhin das Betreiben eines Zeitgebers (124) auf der Basisstation umfasst, um die Ankunftszeit von Identitäten von physikalischen Zellen innerhalb von Nachrichten von der Teilgruppe von Basisstationen des drahtlosen Kommunikationsnetzwerks zu definieren.

5. Verfahren nach einem beliebigen der vorstehenden Ansprüche, wobei das Verfahren weiterhin das Abstimmen (144) der Funkparameter der ersten Basisstation mit der Start-up-Identität der physikalischen Zelle, bis eine vordefinierte Anzahl von Handover-Anforderungen empfangen wird, umfasst.

6. Verfahren nach einem beliebigen der vorstehenden Ansprüche, wobei das Verfahren weiterhin das Abstimmen der Funkparameter der ersten Basisstation mit der Start-up-Identität der physikalischen Zelle, bis eine vordefinierte Anzahl von benachbarten Funkzellen erreicht wird, umfasst.

7. Verfahren nach einem beliebigen der vorstehenden Ansprüche, wobei das Verfahren weiterhin das Zurückweisen von anfänglichen Assoziationsversuchen von einem mobilen Gerät durch die erste Basisstation mit der Start-up-Identität der physikalischen Zelle umfasst.

8. Verfahren nach einem beliebigen der vorstehenden Ansprüche, wobei die Kommunikation der ersten Basisstation mit der Teilgruppe von Basisstationen über eine X2-Schnittstelle erfolgt.

9. Verfahren nach einem beliebigen der vorstehenden Ansprüche, wobei die Kommunikation der ersten Basisstation mit der Teilgruppe von Basisstationen über eine S1-Schnittstelle erfolgt.

10. Verfahren nach einem beliebigen der vorstehenden Ansprüche, weiterhin umfassend das Betreiben einer zweiten Basisstation (126) der Gruppe von mobilen Stationen des drahtlosen Kommunikationsnetzwerks, wobei das Verfahren das Abbrechen (128) einer Handover-Prozedur eines mobilen Gerätes umfasst, wenn eine Handover-Anforderungsbestätigungsnachricht von der ersten Basisstation mit einer Start-up-Identität der physikalischen Zellen empfangen wird.

11. Computerprogramm-Produkt mit maschinenausführbaren Anweisungen zur Durchführung des Verfahrens gemäß einem beliebigen der vorstehenden Ansprüche auf einer Basisstation.

12. Basisstationsvorrichtung, betreibbar für die Durchführung eines Verfahrens gemäß einem beliebigen der Ansprüche 1-10.

## Revendications

1. Procédé de sélection d'une identité de cellule physique pour une première station de base (102) ajoutée à un réseau de communication sans fil existant (100) disposant d'un ensemble de stations de base, la première station de base étant affectée à une identité de cellule physique de démarrage (108), dans lequel le procédé comprend :
- réception, par la première station de base, de messages (110) à partir d'un sous-ensemble de stations de base du réseau de communication sans fil, chacun des messages comprenant l'identité de cellule physique (118) d'une station de base (104) du réseau de communication sans fil ; et
- sélection, par la première station de base, d'une identité de cellule physique permanente (114) pour la première station de base, qui est différente des identités de cellule physique du sous-ensemble de stations de base du réseau de communication sans fil à l'aide des identités de cellule physique reçues avec les messages ;
dans lequel l'identité de cellule physique de démarrage est choisie (130) à partir d'un groupe comprenant au moins une identité de cellule physique, et dans lequel les identités de cellule physique de démarrage du groupe ne sont pas affectées à des stations de base comme des identités de cellule physique permanentes.

2. Procédé selon l'une quelconque des revendications précédentes, dans lequel les identités de cellule physique du sous-ensemble de stations de base sont envoyées à la première station de base par l'intermédiaire d'une pluralité de demandes de transfert.

3. Procédé selon l'une quelconque des revendications précédentes, dans lequel les identités de cellule physique du sous-ensemble de stations de base du réseau de communication sans fil sont envoyées à la première station de base par l'intermédiaire d'au moins une table de relations de voisinage (122).

4. Procédé selon l'une quelconque des revendications précédentes, dans lequel le procédé comprend en outre l'utilisation d'un minuteur (124) sur la première station de base pour définir l'heure de réception des identités de cellule physique au sein des messages à partir du sous-ensemble de stations de base du réseau de communication sans fil.

5. Procédé selon l'une quelconque des revendications précédentes, dans lequel le procédé comprend en outre le réglage (144) des paramètres radio de la première station de base avec l'identité de cellule physique de démarrage jusqu'à ce qu'un nombre prédéfini de demandes de transfert soit reçu.

6. Procédé selon l'une quelconque des revendications précédentes, dans lequel le procédé comprend en outre le réglage (144) des paramètres radio de la première station de base avec l'identité de cellule physique de démarrage jusqu'à ce qu'un nombre prédéfini de cellules radio voisines soit atteint.

7. Procédé selon l'une quelconque des revendications précédentes, dans lequel le procédé comprend en outre le rejet de tentatives d'association initiale à partir d'un appareil mobile par la première station de base avec l'identité de cellule physique de démarrage.

8. Procédé selon l'une quelconque des revendications précédentes, dans lequel la communication de la première station de base avec le sous-ensemble de stations de base est effectuée par l'intermédiaire d'une interface X2.

9. Procédé selon l'une quelconque des revendications précédentes, dans lequel la communication de la première station de base avec le sous-ensemble de stations de base est effectuée par l'intermédiaire d'une interface S1.

10. Procédé selon l'une quelconque des revendications précédentes, comprenant en outre l'utilisation d'une deuxième station de base (126) de l'ensemble de stations mobiles du réseau de communication sans fil, dans lequel le procédé comprend l'abandon (128) d'une procédure de transfert d'un appareil mobile lorsqu'un message de confirmation de demande de transfert est reçu à partir de la première station de base avec une identité de cellule physique de démarrage.

11. Produit de programme informatique comprenant des instructions exécutables par une machine pour mettre en oeuvre le procédé de l'une quelconque des revendications précédentes sur une station de base.

12. Appareil de station de base utilisable pour exécuter un procédé selon l'une quelconque des revendications 1-10.
